# EUROPÄISCHE PATENTANMELDUNG

(11) **EP 1 080 620 A2**
(43) Veröffentlichungstag der Anmeldung: **07.03.2001**
(21) Anmeldenummer: 00119027.1
(22) Anmeldetag: 01.09.2000
(51) Int. Cl.: A01B 51/02

(54) **Motorisch angetriebenes Gerät zur Garten- und Landschaftspflege**

(30) Priorität: 03.09.1999 DE 19942181
(71) Anmelder: Stella Engineering GmbH, 51688 Wipperfürth (DE)
(72) Erfinder: Stella, Alfonso, 51688 Wipperfürth (DE)
(74) Vertreter: Koch, Günther, Dipl.-Ing.

(57) **Zusammenfassung**

Ein Gerät zur Garten- und Landschaftspflege ist insbesondere als Mulchmäher ausgebildet und mit einem Differentialgetriebe ausgestattet, über das zwei Antriebsräder des Gerätes antreibbar sind. Dieses Ausgleichsgetriebe ermöglicht eine gleiche Drehmomentenübertragung auf die Antriebsräder, auch beim Kurvenfahren. Unter bestimmten Betriebsbedingungen, beispielsweise beim Schichtlinienfahren am Hang, ist es zweckmäßig, daß Differential zu sperren, da unter diesen Betriebsbedingungen das bergobere Rad aufgrund der Gewichtsverlagerung entlastet wird und durchdreht.

Der Käfig (18) des Differentialgetriebes wird von einem Motor über ein Geschwindigkeitswechselgetriebe angetrieben, und die die Antriebsräder tragenden Halbwellen tragen Antriebskegelräder innerhalb des Käfigs (18), die mit Ausgleichsrädern in der üblichen Weise kämmen, so daß beim Kurvenfahren die Halbwellen unterschiedliche Drehzahlen aufweisen. Die Differentialsperre erfolgt über zwei große, gegeneinander drehbare, Keilriemenscheibenhälften (32,34), die über einen Keilriemen (50) kuppelbar sind. Die eine Keilriemenscheibenhälfte (32,34) ist mit dem Käfig (18) über eine, auf der ersten Halbwelle gelagerten, Hohlwelle verbunden, während die hiermit zusammenwirkende zweite Keilriemenscheibenhälfte (32,34) auf der ersten Halbwelle sitzt. Über die beiden Keilriemenscheibenhälften (32,34) ist ein Keilriemen (50) geführt, der über eine feste Rolle und eine Spannrolle läuft. Wenn die Spannrolle angespannt wird, werden die beiden Keilriemenscheiben (32,34) miteinander gekuppelt, so daß der Käfig (18) des Differentialgetriebes drehfest mit der ersten Halbwelle verbunden ist, und die zweite Halbwelle ist ebenfalls drehfest mit dem Käfig (18) des Differentialgetriebes verbunden, wodurch die beiden Antriebsräder miteinander starr und drehfest verbunden sind.

## Beschreibung

Die Erfindung betrifft ein motorisch angetriebenes Gerät zur Garten- und Landschaftspflege, nach dem Oberbegriff des Patentanspruchs 1, welches mit einem Fahrantrieb und zur Erleichterung des Kurvenfahrens mit einem Ausgleichs-Differentialgetriebe ausgerüstet ist. Das Gerät kann als handgeführtes Gerät ausgebildet sein oder auch als Aufsitzgerät. Hierbei werden zweckmäßigerweise die Werkzeuge über den gleichen Motor angetrieben, der auch den Radantrieb bewirkt. Während die Werkzeuge, beispielsweise Mähwerkzeuge, Vertikutierwerkzeuge, Häckselwerkzeuge oder Kehrwerkzeuge, stets mit der gleichen durch die Drehzahl des Motors bestimmten Umlaufgeschwindigkeit angetrieben werden, ist es im allgemeinen zweckmäßig, den Radantrieb für unterschiedliche Geschwindigkeiten vorzusehen und zwischen dem Motor und dem Radantrieb ein Geschwindigkeitsuntersetzungsgetriebe vorzusehen, welches als Schaltgetriebe, aber auch als hydrostatisches Getriebe, ausgebildet sein kann.

Bei derartigen Geräten ermöglicht das Differentialgetriebe auch beim Befahren enger Kurven einen gleichmäßigen Radantrieb des inneren und äußeren Rades, weil über das Differentialgetriebe das Eingangsdrehmoment gleichmäßig auf die beiden Antriebsräder verteilt wird. Schwierigkeiten ergeben sich jedoch unter gewissen Betriebsverhältnissen, bei denen der Reibungskoeffizient zwischen Rad und Boden für die beiden Antriebsräder ungleich ist. Eine solche Situation kann nicht nur dann auftreten, wenn die Bodenbeschaffenheit für die beiden Antriebsräder extrem unterschiedlich ist, sondern beispielsweise auch dann, wenn bei gleicher Bodenbeschaffenheit ein Hang über die Höhenlinien befahren wird. Bei einem solchen Schichtlinienfahren am Hang wird das bergobere Rad aufgrund der Gewichtsverlagerung entlastet und durch Abnahme der senkrecht auf den Boden wirkenden Normalkraft, ergibt sich trotz gleichem Reibungskoeffizienten eine Abnahme der Reibungskraft, so daß das bergobere Rad durchdrehen kann.

Aus diesem Grund ist es wünschenswert bei derartigen Geräten die Möglichkeit einer Differentialsperre vorzusehen. Auf vielen Gebieten der Technik, insbesondere im Kraftfahrzeugbau, ist die Anordnung von Differentialsperren üblich, mit denen die beiden Halbwellen starr miteinander verbunden werden können. Es sind hier auch selbstsperrende Differentiale bekannt, bei denen ein Teil des Antriebsmomentes nicht über Ausgleichsräder, sondern über eine Reibkupplung erfolgt, so daß dieser Drehmomentenanteil auch bei einem rutschenden Rad auf das andere übertragen wird.

Derartige Differentialantriebe mit einlegbarer Sperre oder selbstsperrendem Getriebe sind für die Anwendung bei Gartengeräten schon aus Kostengründen im allgemeinen nicht einsetzbar.

Der Erfindung liegt daher die Aufgabe zugrunde, einen für ein gattungsgemäßes Gartengerät geeigneten Fahrantrieb mit Differentialgetriebe zu schaffen, das auf einfache Weise im Bedarfsfall durch die Bedienungsperson schnell und sicher gesperrt und entsperrt werden kann.

Gelöst wird die gestellte Aufgabe durch die im Kennzeichnungsteil des Patentanspruchs 1 angegebenen Merkmale.

Durch die Erfindung wird erreicht, daß das Gerät je nach Bodenbeschaffenheit mit Differential oder gesperrtem Differential betrieben werden kann, wobei die Sperre allein über ein Keilriemenscheibenpaar erfolgt, das über einen Keilriemen gekuppelt wird, der von der Bedienungsperson über eine Spannrolle anspannbar ist.

Eine derartige Sperre des Differentials ist insbesondere dann zweckmäßig und notwendig, wenn als Geschwindigkeitsausgleichsgetriebe ein hydrostatischer Antrieb verwendet wird, da die gesamte Ölmenge zum Antreiben der Radmotoren/Hydr. Achse den Weg des geringsten Widerstandes geht.

Die Betätigung der Spannrolle erfolgt entweder über einen handbetätigten Kupplungshebel am Holm, der für kurze Strecken gehalten werden kann, oder der Kupplungshebel wird über eine Sperre eingerastet und verbleibt ständig in dieser Stellung bis er durch die Bedienungsperson wieder ausgerastet wird. Zweckmäßigerweise steht der Kupplungshebel unter Federvorspannung, die ihn in die Entkupplungsstellung zu ziehen trachtet.

Ausgestaltungen der Erfindung ergeben sich aus den Unteransprüchen.

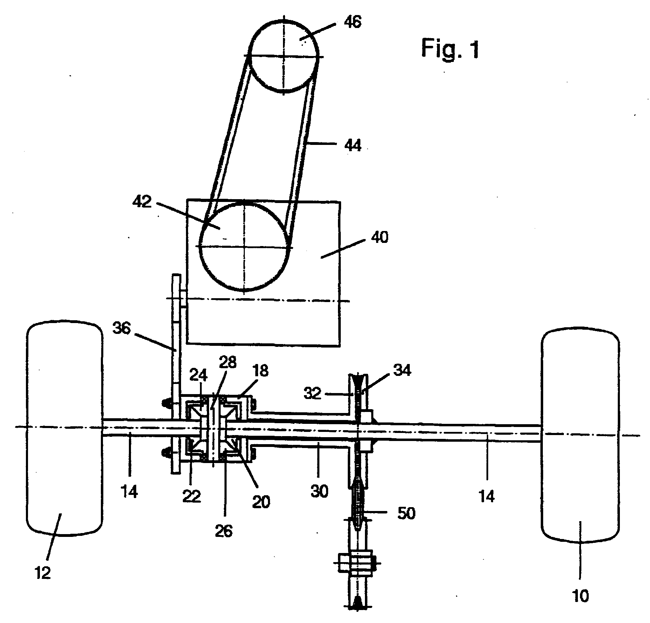

Nachstehend wird ein Ausführungsbeispiel der Erfindung anhand der Zeichnung beschrieben; in der Zeichnung zeigt
- Fig. 1: eine schematische Rückansicht der Fahrantriebsverbindung eines in der Zeichnung im einzelnen nicht dargestellten Gerätes zur Garten- und Landschaftspflege,

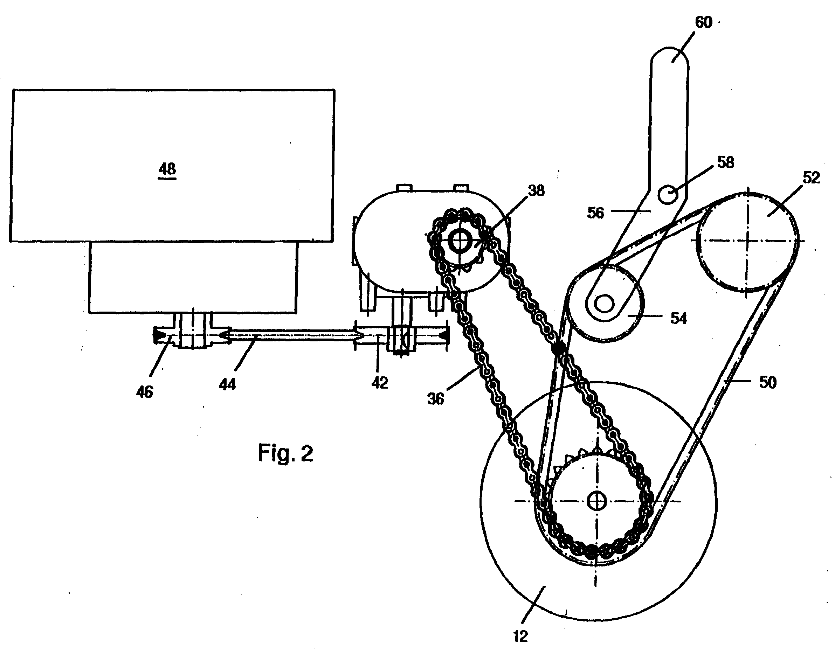

- Fig. 2: eine Seitenansicht zu Fig. 1.

Das in der Zeichnung im einzelnen nicht dargestellte Gerät, kann beispielsweise als Mulchmäher ausgebildet sein, bei dem das von einem Mähwerk geschnittene Gras fein gehäckselt wird, bevor es in gleichmäßiger Verteilung als Mulch auf der Rasenfläche abgelegt wird, um auf diesem geschnittenen Rasen zu verbleiben und diesen zu düngen.

Das rechte Antriebsrad 10 wird von einer ersten Halbwelle 14 getragen, und das linke Antriebsrad 12 sitzt auf einer zweiten Halbwelle 16. Die Halbwellen 14 und 16 sind koaxial zueinander in einem in der Zeichnung nicht dargestellten Chassis des Gerätes gelagert. Auf den benachbart zueinander liegenden Enden der beiden Halbwellen ist ein Käfig 18 eines Differentialgetriebes drehbar gelagert. Innerhalb des Käfigs ist die erste Halbwelle 14 mit einem Antriebskegelrad 20 drehfest verbunden, und die zweite Halbwelle 16 trägt drehfest ein Antriebskegelrad 22. Die beiden Kegelräder 20 und 22 kämmen mit Ausgleichskegelrädern 24 und 26, die im Käfig 18 um eine Achse 28 drehbar gelagert sind.

Mit dem Käfig 18 des Differentialgetriebes ist drehfest eine Hohlwelle 30 verbunden, die drehbar auf der ersten Halbwelle 14 gelagert ist und an ihrem Ende eine erste Keilriemenscheibenhälfte 32 trägt. Benachbart zu dieser ersten Keilriemenscheibenhälfte 32 ist auf der ersten Halbwelle 14 eine zweite Keilriemenscheibenhälfte 34 drehfest aufgesetzt. Das Käfiggehäuse 18 des Differentialgetriebes wird über eine Kette 36 angetrieben, die über ein Ritzel 38 eines Geschwindigkeitswechselgetriebes 40 läuft. Auf einer Eingangswelle des Getriebes 40 ist eine Keilscheibe 42 aufgesetzt, die von einem Keilriemen 44 angetrieben wird, welcher über eine Keilriemenscheibe 46 geführt ist, die auf der Abtriebswelle eines Motors 48 sitzt.

Über die beiden Keilriemenscheibenhälften 32,34 ist ein Keilriemen 50 geführt, der über eine feste Keilriemenscheibe 52 und eine Spannrolle 54 läuft, die an dem einen Hebelarm 56 eines um die Achse 58 schwenkbar gelagerten, doppelarmigen Hebels gelagert ist, dessen anderer Hebelarm 60 als Handgriff ausgebildet oder mit einem Handgriff verbunden ist, der von der Bedienungsperson des Gerätes spannbar ist, um die Keilriemenscheibenhälften 32,34 miteinander zu kuppeln und so das Differential zu sperren, wodurch die beiden Halbwellen 14 und 16 drehfest miteinander verbunden werden. Bei nicht voll angezogenem Spannhebel können die Keilscheiben als Reibungskupplung wirken und einen Teil des Drehmomentes übertragen.

### Bezugszeichenliste

- 10: Antriebsrad rechts
- 12: Antriebsrad links
- 14: erste Halbwelle
- 16: zweite Halbwelle
- 18: Käfig
- 20: Antriebskegelrad
- 22: Antriebskegelrad
- 24: Ausgleichskegelrad
- 26: Ausgleichskegelrad
- 28: Achse
- 30: Hohlwelle
- 32: erste Keilriemenscheibenhälfte
- 34: zweite Keilriemenscheibenhälfte
- 36: Kette
- 38: Ritzel
- 40: Geschwindigkeitswechselgetriebe
- 42: Keilriemenscheibe
- 44: Keilriemen
- 46: Keilriemenscheibe
- 48: Motor
- 50: Keilriemen
- 52: feste Keilriemenscheibe
- 54: Spannrolle
- 56: Arm
- 58: Achse
- 60: Hebelarm

## Patentansprüche

1. Motorisch angetriebenes Gerät zur Garten- und Landschaftspflege, insbesondere Mulchmäher, mit einem Differentialgetriebe, das das Antriebsdrehmoment auf zwei koaxiale Halbwellen (14,16) überträgt, auf denen Antriebsräder (10,12) sitzen,
dadurch gekennzeichnet,
daß ein vom Motor (48) angetriebener Käfig (18) des Differentialgetriebes lose auf den beiden, von den beiden Abtriebsgliedern (20,22) angetriebenen, Halbwellen (14,16) drehbar gelagert ist,
daß der Käfig (18) mit einer Hohlwelle (30) drehfest verbunden ist, die auf der ersten Halbwelle (14) drehbar gelagert ist,
daß die Hohlwelle (30) eine erste Keilriemenscheibenhälfte (32) trägt,
daß die erste Halbwelle (14) eine zweite Keilriemenscheibenhälfte (34) trägt, und
daß die beiden Keilriemenscheibenhälften (32,34) über einen Keilriemen (50) kuppelbar sind und eine Differentialsperre bewirken.

2. Gerät nach Anspruch 1,
dadurch gekennzeichnet,
daß der über die Keilriemenscheibenhälften (32,34) geführte Keilriemen (50) über eine feste Rolle (52) und eine Spannrolle (54) führt, die über einen Bedienungshebel (60,56) spannbar ist.

3. Gerät nach den Ansprüchen 1 und 2,
dadurch gekennzeichnet,
daß der Käfig (18) des Differentialgehäuses von dem die Werkzeuge antreibenden Motor (48) über ein Geschwindigkeitswechselgetriebe (40) antreibbar ist.

4. Gerät nach Anspruch 3,
dadurch gekennzeichnet,
daß das Getriebe (40) als Schaltgetriebe ausgebildet ist.

5. Gerät nach Anspruch 3,
dadurch gekennzeichnet,
daß das Getriebe (40) als hydrostatisches Getriebe ausgebildet ist.

6. Gerät nach einem der Ansprüche 1 bis 5,
dadurch gekennzeichnet,
daß der Käfig (18) des Differentialgetriebes einen Zahnkranz trägt, der über eine Kette (36) von einem Abtriebsritzel (38) des Getriebes (40) antreibbar ist.

7. Gerät nach einem der vorhergehenden Ansprüche,
dadurch gekennzeichnet,
daß der die Spannrolle (54) betätigende Kupplungshebel in Spannstellung einrastbar ist.

8. Gerät nach einem der vorhergehenden Ansprüche,
dadurch gekennzeichnet,
daß der die Spannrolle (54) betätigende Kupplungshebel durch eine Feder in die Entkupplungsstellung vorgespannt ist.
